# EUROPÄISCHE PATENTSCHRIFT

(11) **EP 1 217 172 B1**
(45) Veröffentlichungstag und Bekanntmachung des Hinweises auf die Patenterteilung: **04.05.2005**
(21) Anmeldenummer: 01128802.4
(22) Anmeldetag: 04.12.2001
(51) Int. Cl.: F01D 5/18, B23P 9/00

(54) **Verfahren zur Verringerung der Varianz im Kühlmediumverbrauch von Komponenten einer Strömungsmaschine**
Method for the reduction of the variance of the cooling medium consumption in components of a turbomachine
Procédé pour réduire la variance de la consommation d' agent réfrigerant aux composants d' une turbomachine

(30) Priorität: 22.12.2000 DE 10064266
(43) Veröffentlichungstag der Anmeldung: 26.06.2002
(73) Patentinhaber: ALSTOM Technology Ltd, 5400 Baden (CH)
(72) Erfinder: Beeck, Alexander, Dr., Orlando, Florida 32828 (US); Nagler, Christoph, 8032 Zürich (CH); Richter, Markoph, 5004 Aarau (CH)

(56) Entgegenhaltungen:
- US-A- 3 696 504
- US-A- 5 247 766
- US-A- 5 501 892

## Beschreibung

### Technisches Anwendungsgebiet

Die vorliegende Erfindung betrifft ein Verfahren zur Verringerung der Varianz im Kühlmediumverbrauch von Komponenten einer Strömungsmaschine, insbesondere einer Gasturbine, die eine oder mehrere Durchlassöffnungen bzw. Bohrungen für den Durchtritt eines Kühlmediums aufweisen bei dem eine in den Bohrungen vorhandene Oberflächenrauigkeit durch mechanische Nachbearbeitung verringert wird. Die Erfindung betrifft weiterhin ein Werkzeug für die Durchführung des Verfahrens und eine Komponente, die ein oder mehrere Bohrungen für den Durchtritt eines Kühlmediums aufweist, die mit dem Verfahren nach einem der Ansprüche 1 bis 8 nachbearbeitet sind.

Die ausreichende und zuverlässige Kühlung von Komponenten einer Strömungsmaschine stellt einen wesentlichen Aspekt für den Betrieb der Strömungsmaschine dar. Hochgradig gekühlte Komponenten, wie beispielsweise Turbinenschaufeln oder Brennkammerwände, weisen hierfür zahlreiche Kühlluftbohrungen auf, durch die in das Innere der Komponente eingeleitete Kühlluft strömt und nach außen in das heiße Arbeitsmedium entlassen wird.

Der Zwang zur Verbesserung des Wirkungsgrades moderner Gasturbinen führt zur Notwendigkeit, den Kühlluftverbrauch bei ausreichender Kühlung der zu kühlenden Komponenten zu minimieren. Eine Minimierung des Kühlluftverbrauchs wird einerseits durch eine optimierte Verteilung der Kühlluftbohrungen und andererseits dadurch erreicht, dass die Bohrungsdurchmesser verringert werden und gleichzeitig deren Anzahl erhöht wird.

Das Einbringen der Bohrungen in die Wände der zu kühlenden Komponenten erfolgt durch moderne Fertigungsmethoden, wie beispielsweise Laserbohren, Laserschneiden, elektrochemisches Bohren oder Funkenerodieren. Derartige Bearbeitungsverfahren führen allerdings zu einer Rauigkeit der Oberfläche in der Bohrung. Die Rauigkeitshöhe ist hierbei unabhängig vom Durchmesser der Bohrung, wird also nicht verringert, wenn der Bohrungsdurchmesser verkleinert wird. Während in stationären Gasturbinen der Durchmesser der Kühlluftbohrungen vor einigen Jahren etwa 1 - 1,5 mm betrug, werden heutzutage die Kühlluftbohrungen mit Durchmessern im Bereich von 0,6 - 0,8 mm oder darunter in die Komponenten eingebracht. Damit bestimmt die Oberflächenqualität bzw. die Rauigkeit in der Bohrung jedoch zunehmend den Durchfluss des Kühlmediums. Dieser Einfluss macht sich vor allem in langen Bohrungen bemerkbar, wie sie beispielsweise in der Hinterkante gekühlter Turbinenschaufeln erforderlich sind.

Die Rauigkeitsverteilung in den Bohrungen tritt bei deren Herstellung mehr oder weniger zufällig auf. Besonders einzelne feine Rauigkeitsspitzen, die den Druckverlust über die Bohrung und damit den Kühlluftverbrauch stark beeinflussen können, sind über die bekannten Fertigungsprozesse nicht oder nur unzureichend beherrschbar. Diese zufällige Verteilung der Rauigkeitsspitzen führt zu einer breiten Streuung im Kühlluftverbrauch der gefertigten Komponenten, beispielsweise von filmgekühlten Turbinenschaufeln. Zudem verändern sich die bei der Fertigung der Kühlluftbohrungen auftretenden feinen Rauigkeiten während des Betriebes der Komponenten durch Abnutzung, so dass der Kühlluftverbrauch der Komponenten mit der Zeit unerwünscht ansteigen kann.

### Stand der Technik

Dieser Problematik wird bei der Fertigung dadurch begegnet, dass die mit einem der oben genannten Fertigungsverfahren eingebrachten Bohrungen für das Kühlmedium anschließend noch einmal nachgebohrt werden. Dieses Nachbohren mit einem Bohrer, mit Diamantschleifspitzen oder anderen schneidenden Verfahren verringert die Rauigkeit und damit die Streuung im Kühlmittelverbrauch von Komponente zu Komponente. Die Bohrungen müssen dazu von vornherein etwas kleiner ausgeführt werden, um nach dem durch das Nachbohren hervorgerufenen Materialabtrag den richtigen Durchmesser aufzuweisen. Ein Nachteil dieser bekannten Nachbearbeitungsverfahren besteht jedoch darin, dass durch die schneidenden Verfahren Abfallprodukte wie Späne oder Schleifstaub erzeugt werden. Durch die bisher eingesetzten Techniken steigt damit sowohl der Zeitaufwand für die Fertigstellung der Kühlluftbohrungen als auch die Gefahr, die Komponenten durch die bei der Nachbearbeitung anfallenden Abfallprodukte zu verschmutzen. Derartige Verschmutzungen können dann beim Betrieb der Komponente zum Verstopfen der Kühlluftbohrungen führen.

Das Dokument US-A-5,247,766, das den nächstliegenden Stand der Technik beschreibt, offenbart ein Verfahren nach dem Oberbegriff des Anspruchs 1.

Die Aufgabe der vorliegenden Erfindung besteht darin, ein Verfahren anzugeben, durch das eine Streuung im Verbrauch an Kühlmedium von Komponenten einer Strömungsmaschine ohne die Gefahr einer späteren Verstopfung der Bohrungen für das Kühlmedium durch Abfallprodukte verringert wird.

### Darstellung der Erfindung

Die Aufgabe wird mit dem Verfahren nach Anspruch 1 gelöst. Vorteilhafte Ausgestaltungen des Verfahrens sind Gegenstand der Unteransprüche. Anspruch 9 gibt schließlich ein bevorzugtes Werkzeug für die Durchführung des vorliegenden Verfahrens an.

Gegenstand der Erfindung ist ein Verfahren zur Verringerung der Varianz im Kühlmediumverbrauch von Komponenten einer Strömungsmaschine, insbesondere einer Gasturbine, die eine oder mehrere Durchlassöffnungen bzw. Bohrungen für den Durchtritt eines Kühlmediums aufweisen. Das Verfahren zeichnet sich dadurch aus, dass eine in den Bohrungen nach der Fertigung vorhandene Oberflächenrauigkeit durch mechanisches Verformen von Rauigkeitsspitzen vermindert wird, die die Oberflächenrauigkeit hervorrufen. Die Bohrungen werden hierbei mit einem Werkzeug derart nachbearbeitet, dass die Rauigkeiten durch Verformung vergleichmäßigt werden. Vor allem feine Rauigkeitsspitzen werden damit beseitigt, so dass eine deutlich verminderte Varianz des Kühlluftverbrauchs, beispielsweise von Schaufel zu Schaufel einer Gasturbine, erreicht werden kann.
Das Verfahren eignet sich hierbei insbesondere zur Nachbearbeitung von Kühlluftbohrungen in Komponenten einer Gasturbine, beispielsweise der Kühlluftbohrungen in den Brennkammerwänden oder den Turbinenschaufeln der Gasturbine.

Vorzugsweise erfolgt das Verformen der Rauhigkeitsspitzen durch Schlagen und/oder Drücken und/oder Walzen. Auch ein anderes ähnlich verformendes Verfahren ist einsetzbar.

Erfindungsgemäß wurde hierbei erkannt, dass aufgrund der relativ kleinen in den Bohrungen auftretenden Rauigkeitsspitzen nicht unbedingt ein schneidendes Verfahren zur Verbesserung der Oberflächenqualität eingesetzt werden muss. Das Einebnen der Rauigkeitsspitzen durch einfache mechanische Verformung, beispielsweise mittels Schlagen, Drücken oder Walzen, bietet hierbei erhebliche Vorteile. Es vereinfacht einerseits die Nachbearbeitung und vermeidet andererseits das Entstehen von Spänen oder anderen Abfallpartikeln, die die Komponenten innerlich verschmutzen können. Das vorliegende Verfahren ermöglicht in vorteilhafter Weise eine Nacharbeit an der fertigen Komponente, beispielsweise in bereits eingebautem Zustand in der Maschine, beispielsweise der Gasturbine. Die Bohrungen können hierbei bei der Fertigung bereits auf den endgültigen Durchmesser bearbeitet werden, da bei der erfindungsgemäßen Nachbearbeitung die für die Streuung des Durchflusses verantwortlichen Rauigkeitsspitzen lediglich vergleichmäßigt werden, ohne den ursprünglich veranschlagten Bohrungsdurchmesser zu vergrößern.

Die Verformung der Rauigkeitsspitzen in den Bohrungen erfolgt mit einem nicht schneidenden oder spanabhebenden Werkzeug, das sowohl manuell als auch maschinell in die Bohrung eingeführt werden kann. Das Werkzeug weist eine stiftartige Form auf, so dass es sich nach Einfügen in die Kühlluftbohrung zumindest über die gesamte Länge der Kühlluftbohrung erstreckt. Anschließend wird es durch einen geeigneten Antrieb in der Bohrung in Bewegung versetzt, so dass es verformend auf die Rauigkeitsspitzen einwirkt. Die mit dem Antrieb erzeugte Bewegung des stiftförmigen Werkzeuges kann rotierend, translatorisch oszillierend oder auch wellenförmig sein. Grundsätzlich sind sämtliche Bewegungsformen einsetzbar, die zu einer die Rauhigkeitsspitzen verformenden Wechselwirkung der Innenfläche der Bohrung mit dem stiftförmigen Werkzeug führen. So kann das Werkzeug beispielsweise auch mittels Ultraschall in hochfrequente Schwingungen versetzt werden, um die feinen Rauigkeiten in der Bohrung einzuebnen.

Die Form des Werkzeuges kann hierbei ebenfalls in weiten Grenzen variiert werden. Es kann ein stiftförmiges Werkzeug eingesetzt werden, das zylindrisch oder konisch ist oder einen über seine Länge veränderlichen Querschnitt aufweist. Weiterhin kann auch ein entlang seiner Längsachse spiralförmiges oder wellenförmig verlaufendes Werkzeug zum Einsatz kommen.

Das Werkzeug ist hierbei vorzugsweise mit einem Antrieb versehen, der es im Falle einer nicht rotationssymmetrischen Ausgestaltung mit einer translatorisch oszillierenden Bewegung in Richtung der Längsachse und einer rotierenden Bewegung um die Längsachse beaufschlagt. Im Falle eines Werkzeugkörpers mit einer rotationssymmetrischen Ausgestaltung ist der Antrieb vorzugsweise zur Erzeugung einer translatorisch oszillierenden Bewegung in Richtung und quer zur Richtung der Längsachse ausgebildet.

### Kurze Beschreibung der Zeichnungen

Das erfindungsgemäße Verfahren wird nachfolgend anhand von Ausführungsbeispielen in Verbindung mit den Zeichnungen ohne Beschränkung des allgemeinen Erfindungsgedankens nochmals kurz erläutert. Hierbei zeigen:
- Fig. 1: ein Beispiel für eine Kühlluftbohrung einer Komponente vor der Nachbearbeitung;
- Fig. 2: ein erstes Beispiel für ein Werkzeug zur erfindungsgemäßen Nachbearbeitung;
- Fig. 3: ein zweites Beispiel für ein Werkzeug zur erfindungsgemäßen Nachbearbeitung;
- Fig. 4a: einen Ausschnitt aus einer Kühlluftbohrung vor der Nachbearbeitung; und
- Fig. 4b: einen Ausschnitt aus der Kühlluftbohrung nach der Nachbearbeitung.

### Wege zur Ausführung der Erfindung

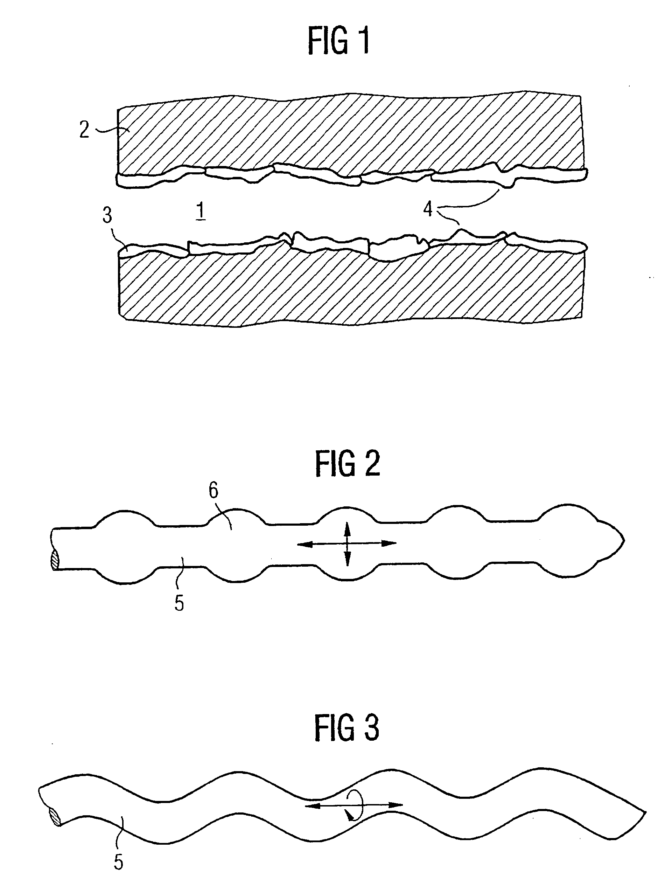

Figur 1 zeigt schematisch ein Beispiel für die Oberflächenqualität in einer Kühlluftbohrung einer Komponente einer Gasturbine. Die Kühlluftbohrung 1 wurde hierbei mit einem geeigneten Bohrverfahren in die Wand 2 der Komponente eingebracht. Durch die hierbei eingesetzten Bohrverfahren treten am inneren Rand der Kühlluftbohrung angeschmolzene Schichten 3 auf, die zahlreiche Rauigkeitsspitzen 4 aufweisen. Die Verteilung und Höhe dieser Rauigkeitsspitzen 4 variiert von Bohrung zu Bohrung. Gerade bei den heutzutage erforderlichen Kühlluftbohrungen geringen Durchmessers beeinflussen diese Rauigkeitsspitzen den Durchfluss des Kühlmediums und somit den Kühlmittelverbrauch erheblich.

Zur Verringerung der Streuung des Kühlmittelverbrauchs von Bohrung zu Bohrung bzw. von Komponente zu Komponente werden die Rauigkeitsspitzen 4 in der Bohrung 1 mit dem vorliegenden Verfahren verformend eingeebnet bzw. vergleichmäßigt. Durch diese lediglich verformende - nicht schneidende bzw. nicht spanabhebende - Bearbeitung wird die Erzeugung von Spänen oder sonstigen Abfallprodukten vermieden, die zu einer Verstopfung der Kühlluftbohrungen im späteren Betrieb führen können. Die Vergleichmäßigung der Rauigkeitsspitzen führt aber dennoch zu einer deutlichen Verminderung der Streuung des Durchflusses an Kühlmedium von Bohrung zu Bohrung bzw. von Komponente zu Komponente.

Figur 2 zeigt ein Beispiel für ein Werkzeug zur Durchführung des vorliegenden Verfahrens. Das Werkzeug besteht aus einem stiftförmigen Werkzeugkörper 5, der in diesem Beispiel entlang seiner Längsachse mit veränderlichem Querschnitt ausgebildet ist. Der stiftförmige Werkzeugkörper 5 ist mit einem entsprechendem Antrieb verbunden (nicht dargestellt), der den Stift zu einer oszillierenden Translationsbewegung entlang seiner Längsachse sowie quer zu seiner Längsachse (durch Pfeile angedeutet) antreibt. Der veränderliche Querschnitt des stiftförmigen Werkzeugkörpers 5 wird in diesem Beispiel durch kugelartige Verdickungen 6 gebildet, die in regelmäßigem Abstand entlang der Längsachse des Werkzeugkörpers 5 auftreten. Durch die mit den Pfeilen dargestellte oszillatorische Bewegung des Werkzeugkörpers 5 in einer Kühlluftbohrung 1, wie die der Figur 1, werden die Rauigkeitsspitzen 4 durch eine schlagende Bewegung verformt bzw. glatt gedrückt.

Das Material des stiftförmigen Werkzeugkörpers 5 sollte hierbei selbstverständlich zumindest die Härte des einzuebnenden Materials aufweisen. Es kann sich hierbei um einen metallischen oder keramischen Werkzeugkörper oder auch um einen Werkzeugkörper eines anderen Materials handeln, das beispielsweise auch mit einer harten Schicht beschichtet sein kann. Der Durchmesser des Werkzeugkörpers muss selbstverständlich geringer sein als der Durchmesser der Kühlluftbohrungen. Vorzugsweise wird ein derartiger Werkzeugkörper daher einen Durchmesser von 0,5 mm oder darunter aufweisen.

Figur 3 zeigt ein weiteres Beispiel für die Form eines stiftförmigen Werkzeugkörpers 5 zum Einsatz beim vorliegenden Verfahren. In diesem Beispiel ist der stiftförmige Werkzeugkörper 5 wellenförmig ausgestaltet. Der nicht dargestellte Antrieb treibt diesen Stift 5 in der Kühlluftbohrung zu einer rotatorischen Bewegung um seine Längsachse sowie einer translatorischen Bewegung entlang seiner Längsachse an, wie dies durch die Pfeile veranschaulicht wird. Auch durch eine derartige Ausgestaltung wird wiederum die gleiche einebnende Wirkung auf die Rauigkeitsspitzen 4 erzielt wie mit dem Werkzeugkörper der Figur 2.
Die wellenförmige Geometrie des Werkzeugkörpers 5 der Figur 3 wird vorzugsweise durch eine schraubenförmige oder spiralförmige Geometrie dieses Körpers realisiert, kann jedoch auch nur in einer Ebene vorliegen.

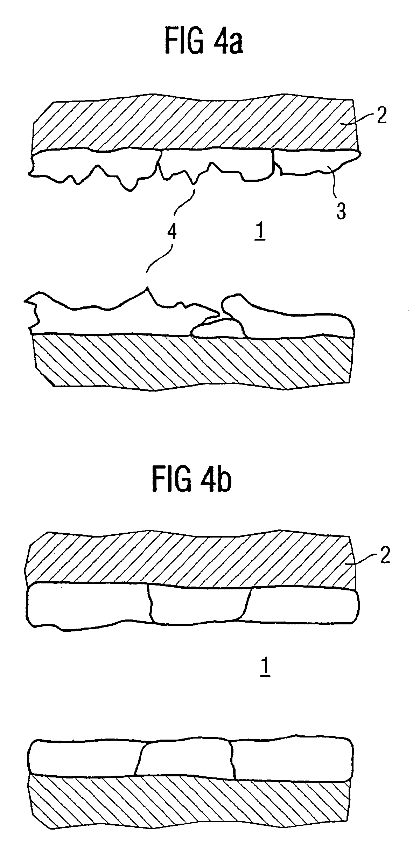

Die Figuren 4a und 4b zeigen schließlich schematisch einen Ausschnitt aus einer Kühlluftbohrung 1 wie die der Figur 1 vor und nach der Nachbearbeitung mit dem vorliegenden Verfahren. In Figur 4a ist hierbei die noch sehr raue innere Oberfläche der Kühlluftbohrung 1 mit zahlreichen Rauigkeitsspitzen 4 zu erkennen.
Nach der Nachbearbeitung mit dem erfindungsgemäßen Verfahren sind die Rauigkeitsspitzen 4 eingeebnet, so dass eine deutlich geglättete innere Oberfläche der Kühlluftbohrung 1 vorliegt (Figur 4b).

### Bezugszeichenliste

- 1: Kühlluftbohrung
- 2: Komponentenwand
- 3: angeschmolzene Schicht
- 4: Rauigkeitsspitzen
- 5: Werkzeugkörper
- 6: kugelförmige Verdickungen

## Patentansprüche

1. Verfahren zur Verringerung der Varianz im Kühlmediumverbrauch von Komponenten einer Strömungsmaschine, insbesondere einer Gasturbine, die eine oder mehrere Bohrungen (1) für den Durchtritt eines Kühlmediums aufweisen, bei dem eine in den Bohrungen (1) vorhandene Oberflächenrauigkeit durch mechanische Nachbearbeitung verringert wird,
**dadurch gekennzeichnet,**
**dass** die mechanische Nachbearbeitung durch Verformen von Rauigkeitsspitzen (4), die die Oberflächenrauigkeit hervorrufen, erfolgt, wobei der ursprünglich veranschlagte Bohrungsdurchmesser erhalten bleibt.

2. Verfahren nach Anspruch 1,
**dadurch gekennzeichnet,**
**dass** das Verformen durch Schlagen und/oder Drücken und/oder Walzen erfolgt.

3. Verfahren nach Anspruch 1 oder 2,
**dadurch gekennzeichnet,**
**dass** das Verformen mit einem annähernd stiftförmigen Werkzeug erfolgt, das manuell oder maschinell in die Bohrung (1) eingeführt und in der Bohrung (1) zum Einebnen der Rauigkeitsspitzen (4) bewegt wird.

4. Verfahren nach Anspruch 3,
**dadurch gekennzeichnet,**
**dass** das stiftförmige Werkzeug in der Bohrung (1) zur Ausführung einer rotierenden und/oder translatorisch oszillierenden und/oder wellenförmigen Bewegung angetrieben wird.

5. Verfahren nach Anspruch 3 oder 4,
**dadurch gekennzeichnet,**
**dass** das stiftförmige Werkzeug in der Bohrung (1) durch Ultraschallankopplung in hochfrequente Schwingungen versetzt wird.

6. Verfahren nach einem der Ansprüche 3 bis 5,
**dadurch gekennzeichnet,**
**dass** ein stiftförmiges Werkzeug eingesetzt wird, das zylindrisch, konisch oder im Querschnitt veränderlich ausgebildet ist.

7. Verfahren nach einem der Ansprüche 3 bis 5,
**dadurch gekennzeichnet,**
**dass** ein stiftförmiges Werkzeug eingesetzt wird, das entlang seiner Längsachse wellenförmig verläuft.

8. Verfahren nach einem der Ansprüche 3 bis 5,
**dadurch gekennzeichnet,**
**dass** ein stiftförmiges Werkzeug eingesetzt wird, das an seiner Aussenfläche Erhebungen aufweist.

9. Werkzeug zur Durchführung des Verfahrens nach einem der Ansprüche 1 bis 8, bestehend aus einem annähernd stiftartig ausgebildeten Werkzeugkörper (5) mit einem Antrieb,
wobei der Werkzeugkörper (5) entlang seiner Längsachse zumindest in einer Ebene eine wellenförmige Kontur aufweist oder mit Erhebungen an seiner Aussenfläche ausgebildet ist und der Antrieb derart ausgebildet ist, dass er den Werkzeugkörper (5) mit einer translatorisch oszillierenden Bewegung in Richtung der Längsachse und einer rotierenden Bewegung um die Längsachse oder mit einer translatorisch oszillierenden Bewegung in Richtung und quer zur Längsachse beaufschlagen kann.

10. Komponente einer Strömungsmaschine, insbesondere einer Gasturbine, die eine oder mehrere Bohrungen (1) für den Durchtritt eines Kühlmediums aufweist, die mit dem Verfahren nach einem der Ansprüche 1 bis 8 nachbearbeitet sind.

## Claims

1. Method for reducing the variance in the cooling medium consumption of components of a continuous flow machine, in particular a gas turbine, which have one or more holes (1) for a cooling medium to pass through, and in which any surface roughness in the holes (1) is reduced by mechanical reprocessing,
**characterized**
**in that** the mechanical reprocessing is carried out by deformation of the roughness peaks (4) which cause the surface roughness, with the originally estimated hole diameter being maintained.

2. Method according to Claim 1,
**characterized**
**in that** the deformation is carried out by striking and/or pressing and/or rolling.

3. Method according to Claim 1 or 2,
**characterized**
**in that** the deformation is produced by means of a tool which is approximately in the form of a pin, is inserted into the hole (1) manually or by a machine and is moved in the hole (1) in order to flatten out the roughness peaks (4).

4. Method according to Claim 3,
**characterized**
**in that** the tool which is in the form of a pin is driven in the hole (1) in order to carry out a rotating and/or translationally oscillating and/or wave movement.

5. Method according to Claim 3 or 4,
**characterized**
**in that** the tool which is in the form of a pin is caused to oscillate at high frequency in the hole (1) by application of ultrasound.

6. Method according to one of Claims 3 to 5,
**characterized**
**in that** a tool is used which is in the form of a pin and is designed to be cylindrical, conical or to have a variable cross section.

7. Method according to one of Claims 3 to 5,
**characterized**
**in that** a tool is used which is in the form of a pin and has a corrugated profile along its longitudinal axis.

8. Method according to one of Claims 3 to 5,
**characterized**
**in that** a tool is used which is in the form of a pin and has projections on its outer surface.

9. Tool for carrying out the method according to one of Claims 1 to 8, comprising a tool body (5) which is approximately in the form of a pin and has a drive, with the tool body (5) having a corrugated contour on at least one plane along its longitudinal axis or being formed with projections on its outer surface, and the drive being designed such that it can apply a translationally oscillating movement to the tool body (5) in the direction of the longitudinal axis, and a rotating movement about the longitudinal axis or can apply a translationally oscillating movement in the direction of the longitudinal axis and transversely with respect to the longitudinal axis.

10. Component of a continuous flow machine, in particular of a gas turbine, which has one or more holes (1) for a cooling medium to pass through and which are reprocessed by the method according to one of Claims 1 to 8.

## Revendications

1. Procédé pour réduire la variance dans la consommation de réfrigérant de composants d'une turbomachine, notamment d'une turbine à gaz, qui présentent un ou plusieurs alésages (1) pour le passage d'un réfrigérant, dans lequel une rugosité de surface existant dans les alésages (1) est réduite par un post-usinage mécanique,
**caractérisé en ce que**
le post-usinage mécanique est effectué par déformation de pointes de rugosité (4) qui sont à l'origine de la rugosité de surface, le diamètre d'alésage estimé initialement étant maintenu.

2. Procédé selon la revendication 1,
**caractérisé en ce que**
la déformation est effectuée par battage et/ou pression et/ou laminage.

3. Procédé selon la revendication 1 ou 2,
**caractérisé en ce que**
la déformation s'effectue avec un outil approximativement en forme de broche qui est introduit manuellement ou par une machine dans l'alésage (1) et qui est déplacé dans l'alésage (1) pour niveler les pointes de rugosité (4).

4. Procédé selon la revendication 3,
**caractérisé en ce que**
l'outil en forme de broche est entraîné dans l'alésage (1) en vue d'effectuer un mouvement de rotation et/ou oscillant de translation et/ou ondulatoire.

5. Procédé selon la revendication 3 ou 4,
**caractérisé en ce que**
l'outil en forme de broche est soumis à des oscillations haute fréquence par couplage ultrasons dans l'alésage (1).

6. Procédé selon l'une quelconque des revendications 3 à 5,
**caractérisé en ce que**
l'on utilise un outil en forme de broche qui est réalisé avec une forme cylindrique, conique, ou de section transversale variable.

7. Procédé selon l'une quelconque des revendications 3 à 5,
**caractérisé en ce que**
l'on utilise un outil en forme de broche qui s'étend suivant une forme ondulée le long de son axe longitudinal.

8. Procédé selon l'une quelconque des revendications 3 à 5,
**caractérisé en ce que**
l'on utilise un outil en forme de broche qui présente des bossages sur sa surface extérieure.

9. Outil pour mettre en oeuvre le procédé selon l'une quelconque des revendications 1 à 8, se composant d'un corps d'outil (5) réalisé approximativement en forme de broche avec un entraînement,
le corps d'outil (5) présentant au moins dans un plan le long de son axe longitudinal un contour ondulé ou étant réalisé avec des bossages sur sa surface extérieure et l'entraînement étant réalisé de telle sorte qu'il puisse solliciter le corps d'outil (5) avec un mouvement d'oscillation en translation dans la direction de l'axe longitudinal et avec un mouvement de rotation autour de l'axe longitudinal ou avec un mouvement d'oscillation en translation dans la direction de l'axe longitudinal et transversalement à l'axe longitudinal.

10. Composant d'une turbomachine, en particulier d'une turbine à gaz, qui présente un ou plusieurs alésages (1) pour le passage d'un réfrigérant, qui sont post-usinés avec le procédé selon l'une quelconque des revendications 1 à 8.
